(19) Europäisches Patentamt
European Patent Office
Office européen des brevets

(11) Publication number: **0 320 652 A1**

(12) **EUROPEAN PATENT APPLICATION**

(21) Application number: **88119323.9**

(22) Date of filing: **21.11.88**

(51) Int. Cl.4: **C08K 5/52 , C08L 69/00**

The title of the invention has been amended (Guidelines for Examination in the EPO, A-III, 7.3).

(30) Priority: **16.12.87 US 133859**

(43) Date of publication of application: **21.06.89 Bulletin 89/25**

(84) Designated Contracting States: **DE FR GB IT NL**

(71) Applicant: **GENERAL ELECTRIC COMPANY**
**1 River Road**
**Schenectady New York 12305(US)**

(72) Inventor: **Boutni, Omar Mohamed**
**1232 Oriole Drive**
**Mt. Vernon Indiana 47620(US)**

(74) Representative: **Catherine, Alain**
**General Electric France Service de Propriété Industrielle 18 Rue Horace Vernet B.P. 76**
**F-92134 Issy-les-Moulineaux Cédex(FR)**

(54) **Copolyester carbonate composition containing phosphites.**

(57) A composition comprising an admixture of aromatic copolyestercarbonate with an anti-yellowing effective amount of a phosphite of the formula:

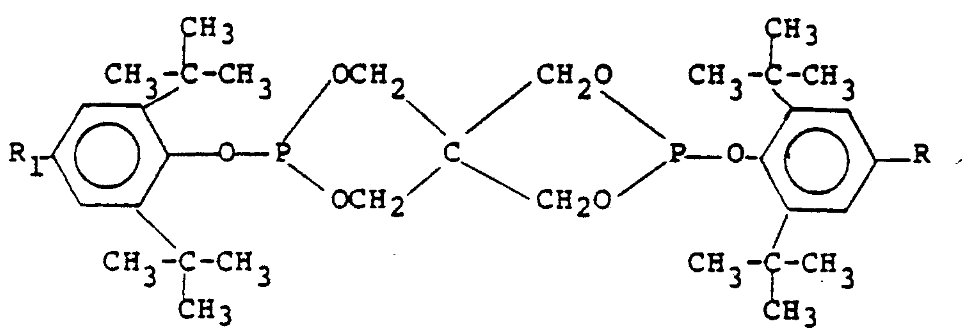

wherein R and $R_1$ are the same or different and are alkyl of one to six carbon atoms, inclusive.

EP 0 320 652 A1

## COMPOSITION

### BACKGROUND OF THE INVENTION

Aromatic copolyestercarbonates are well known thermoplastic resins. As like many other resins, copolyestercarbonates require certain stabilizers so as to protect them from various phenomenon to which they are exposed, for example sun light, heat during processing, water vapor and the like. With respect to thermal stabilization properties, copolyestercarbonates are known to yellow, a phenomenon related to the decomposition of the polymer chains during exposure to heat during processing. Because of its very high Tg, glass transition temperature, polycarbonates must be processed at a high temperature to make them sufficiently plastic to obtain the desired shapes utilized in various applications. Typical stabilizers used over the years are phosphites and phosphonites.

Typical of the phosphites are the phosphites disclosed in Fritz U.S.P. 3,305,520. However these phosphites have been expanded to include other phosphites of far more complex structure. In fact these phosphites have been specifi...ly included with other types of additives in copolyestercarbonates to achieve specific desired effects. U.S.P. 4,221,728, Jaquiss, et al is one of these references. In this reference a copolyestercarbonate is combined with a minor amount of an end blocked polyorgano hydrogen siloxane which confers antioxidant-reducing agent-thermostabilizing properties which are allegedly due to the presence of silicon bonded active hydrogen, see U.S.P. 4,221,728 incorporated by reference. Optionally included in the invention of that reference is a minor amount of a phosphite of phosphonite and/or epoxy compound. When discussing the various phosphites and phosphonites which can be present in the copolyestercarbonate composition, a generic schematic formula is presented at column 5, lines 30- 38, which is broad enough to include the specific phosphites of this invention. However, there is no specific direction to these phosphites. In fact none of the examples of the reference utilizes these phosphites and indeed there is no illustrative exemplification of these phospites. Still further, there is additionally no exemplification of copolyestercarbonates, only polycarbonates.

It has now been found that the usage of a particular phosphite with aromatic copolyestercarbonate brings about significantly lower Yellowness Index (Y.I.) and particularly surprising lower haze while substantially maintaining other significant properties of the aromatic copolyestercarbonate.

### SUMMARY OF THE INVENTION

In accordance with the invention there is a composition which comprises an aromatic copolyestercarbonate in admixture with an antiyellowing effective amount of a phosphite of the formula

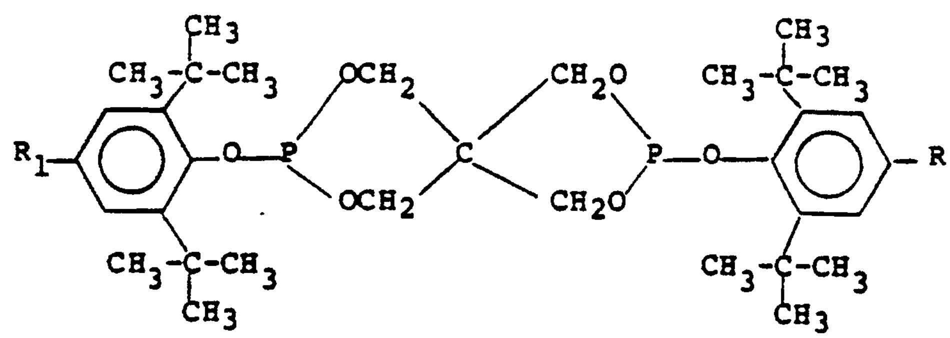

wherein R and $R_1$ are the same or different and are alkyl of one to six carbon atoms, inclusive.

A further composition is that wherein an end blocked polyorganohydrogen siloxane, preferably as disclosed in U.S.P. 4,221,728, is essentially absent. A further aspect of the invention is that epoxides, particularly those as disclosed in U.S.P. 4,221,728, also be essentially absent when the siloxane is essentially absent.

## DETAILED DESCRIPTION OF THE INVENTION

The aromatic copolyestercarbonates suitable for use herein comprise high molecular weight thermoplastic aromatic copolyestercarbonates with recurring carbonate groups, carboxylate groups, and aromatic carbocyclic groups in the polymer chain in which at least some of the carbonate groups and at least some of the carboxylate groups are bonded directly to the ring carbon atoms of the aromatic carbocyclic groups.

Those copolyestercarbonates contain ester bonds and carbonate bonds in the chain, wherein the amount of the ester bonds (ester content) is in the range of from about 10 to about 95 mole percent, preferably from about 35 to about 80 mole percent ester bonds (ester content). For example, 5 moles of bisphenol-A reacting completely with 4 moles of isophthaloyl dichloride and 1 mole of phosgene would give a copolyestercarbonate of 80 mole percent ester bonds (ester content).

The copolyestercarbonates of the instant invention, as well as methods for their preparation, are disclosed, inter alia, in U.S.P. 3,169,121; 4,238,596; 4,156,069; and 4,238,597, all of which are incorporated herein by reference.

The copolyestercarbonates may be prepared by a variety of methods including melt polymerization, transesterification, and the interfacial polymerization processes.

These copolyestercarbonates may be readily prepared by the reaction of (i) at least one dihydric phenol, (ii) a carbonate precursor, and (iii) at least one ester precursor.

The dihydric phenols useful in the preparation of the instant copolyestercarbonates may be represented by the general formula

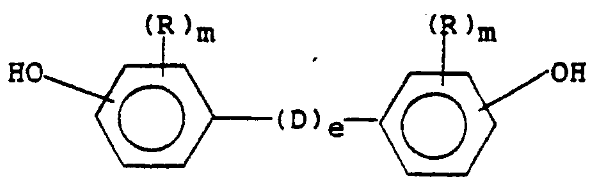

wherein R is independently selected from halogen and monovalent hydrocarbon radicals; D is selected from divalent hydrocarbon radicals,

$-O-$, $-\overset{\overset{O}{\|}}{C}-$, $-S-$, $-S-S-$, $-\overset{\overset{O}{\|}}{S}-$, and $-SO_2-$,

m is independently selected from integers having a value of from 0 to 4 inclusive; e is either zero or one.

The monovalent hydrocarbon radicals represented by R include the alkyl, cycloalkyl, aryl, aralkyl, and alkaryl radicals. Preferred alkyl radicals are those containing from 1 to about 10 carbon atoms. Preferred cycloalkyl radicals are those containing from 4 to about 8 ring carbon atoms. Preferred aryl radicals are those containing from 6 to 12 ring carbon atoms, i.e., phenyl, naphthyl, and biphenyl. Preferred aralkyl and alkaryl radicals are those containing from 7 to about 14 carbon atoms.

The divalent hydrocarbon radicals represented by D include alkylene, alkylidene, cycloalkylene and cycloalkylidene radicals. The preferred alkylene radicals are those containing from 2 to about 20 carbon atoms. The preferred alkylidene radicals are those containing from 1 to about 20 carbon atoms. The preferred cycloalkylene and cycloalkylidene radicals are those containing from 4 to about 16 ring carbon atoms. Typical dihydric phenols are:

2,2-bis-(4-hydroxyphenyl)propane;
hydroquinone;
resorcinol;
2,2-bis-(4-hydroxyphenyl)pentane;
biphenol
2,4′-(dihydroxydiphenyl)methane;
bis-(2-hydroxyphenyl)methane;
bis-(4-hydroxyphenyl)methane;
bis-(4-hydroxy-5-nitrophenyl)methane;
1,1-bis(4-hydroxyphenyl)ethane;
3,3-bis(4-hydroxyphenyl)pentane;
2,2-dihydroxydiphenyl;
2,6-dihydroxynaphthalene;

bis-(4-hydroxyphenyl)sulfone;
bis-(3,5-dimethyl-4-hydroxyphenyl)sulfone;
2,2-bis-(3,5-dimethyl-4-hydroxyphenyl)propane;
2,4′-dihydroxydiphenyl sulfone;
5′-chloro-2,4′-dihydroxydiphenyl sulfone;
bis-(4-hydroxyphenyl)diphenyl sulfone;
4′4′-dihydroxydiphenyl ether;
4,4′-dihydroxy-3,3′-dichlorodiphenyl ether;
4,4′-dihydroxy-2,5-dimethylphenyl ether;
and the like.

Other dihydric phenols which are also suitable for use in the preparation of the above polycarbonates are disclosed in U.S. 2,999,835; 3,038,365; 3,334,154 and 4,131,575. Bisphenol-A is preferred.

The ester precursor may be difunctional carboxylic acid or, preferably, the ester forming reactive derivative of the difunctional carboxylic acid. In general, any difunctional carboxylic acid, and preferably any ester forming reactive derivative thereof, conventionally used in the preparation of linear polyesters may be utilized in the preparation of the instant copolyestercarbonates. In general the difunctional car boxylic acids, preferably their ester forming reactive derivatives, include the aliphatic carboxylic acids, the aromatic carboxylic acids, and the aliphatic aromatic carboxylic acids, and their ester forming reactive derivatives. Some useful difunctional carboxylic acids are disclosed in U.S.P. 3,169,121, which is hereby incorporated herein by reference.

Particularly useful difunctional carboxylic acids, preferably their ester forming reactive derivatives, are the difunctional aromatic carboxylic acids.

The preferred ester forming reactive derivatives of the difunctional aromatic carboxylic acids are the acid dihalides, preferably the acid dichlorides. Some illustrative non-limiting examples of these derivatives are isophthaloyl dichloride, terephthaloyl dichloride, and mixtures thereof. A particularly useful mixture of the ester forming reactive derivatives of isophthalic acid and terephthalic acid is one which contains, in a weight ration, from about 1:10 to about 9.8:0.2 of isophthaloyl dichloride to terephthaloyl dichloride.

The phosphite useful herein is a phosphite of the formula

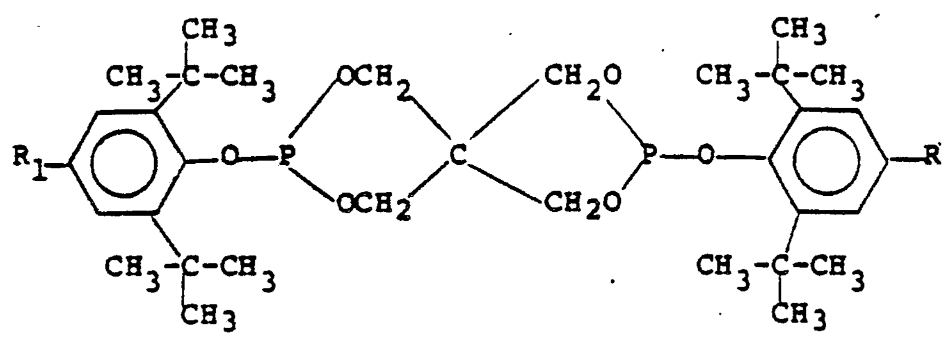

wherein R and $R_1$ are the same or different and are alkyl of one to six carbon atoms, inclusive.

Alkyl includes normal and branched groups, for example methyl, ethyl, propyl, isobutyl, neopentyl and tertiary butyl.

The phosphite wherein R and $R_1$ are methyl is preferred.

The compositions of the invention are prepared simply by mixing the phosphite and the aromatic copolyestercarbonate together as in a Brabender mixture and then extruding into a filament which can be chopped into a pellet. The usual applications for which aromatic polycarbonates are useful are applicable here as well.

An anti-yellowing effective amount of the phosphite is admixed with the copolyestercarbonate. Generally this is from about 0.01 to about 0.5 parts per hundred parts of the copolyestercarbonate, preferably from about 0.02 to about 0.4 parts per hundred.

Extrusion and molding temperatures are the typical ones employed for copolyestercarbonates.

The instant compositions may also optionally contain certain commonly known and used additives such as, for example, flame retardants, antioxidants-antistatic agents, fillers such as glass fibers, glass beads, talc, mica, clay, and the like; mold release agents; ultraviolet radiation absorbers such as the benzophenones, benzotriazoles, benzylidene malonates, and the like. The compositions of the invention are expected to have better compatibility with mold release agents which are pentaerythritol based.

The following examples are presented to more fully and clearly illustrate the invention. Although the examples set forth the best mode presently known to practice the invention, they are intended to be and should be considered as illustrative rather than limiting the invention. In the examples, all parts and percentages are by parts per hundred unless otherwise specified.

## EXAMPLES

In the examples, the aromatic copolyestercarbonate is bisphenol-A copolyestercarbonate with 78 mole percent ester bonds of which 90% is cophthalate and 10% is terephthalate, endcapped with paracumyl phenol. The copolyestercarbonate has an intrinsic viscosity of 0.46 as measured in methylene chloride at 25 °C. It is combined with the phosphite of the invention, bis(2,6-di-t.butyl-4-methylphenyl)pentaerythritol diphosphite, extruded at 500 °F and molded at 650 °F and the parts tested for the following properties according to the following test systems:

Y.I.: ASTM D1925
Notched Izod: ASTM D256.
Transmission (%): ASTM D1003
Haze (%) : ASTM D1003

K.I. 6 min.: The Kasha Index is a measurement of the melt viscosity of the resin. The procedure for determining the Kasha Index is as follows: 7 grams of resin pellets, dried a minimum of 90 minutes at 125 °C, are added to a modified Tinius-Olsen model T3 melt indexer; the temperature in the indexer is maintained at 300 °C and the resin is heated at this temperature for 6 minutes; after 6 minutes the resin is forced through a 1.05 mm radius orifice using a plunger of radius 4.7 mm and an applied force of 7.7 kgs. The time required for the plunger to travel 5.1 cm is measured in centisdeconds; this is reported as the KI. The higher the KI, the higher the melt viscosity and the more viscous the resin, and the harder or more difficult the processability.

Also tested in direct comparison with the invention phosphite with compositions prepared in the same manner was Irgafos 168, a phosphite shown below obtained from Ciba Geigy which is used in commercial polycarbonate compositions.

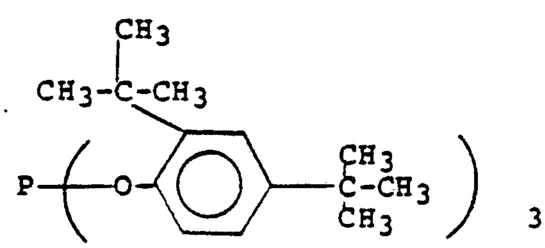

Below are the results:

TABLE 1

| COMPOSITION | 1 | 2 | 3 | 4 | 5 | 6 |
|---|---|---|---|---|---|---|
| Copolyestercarbonate (parts) | 100 | 100 | 100 | 100 | 100 | 100 |
| Irgafos 168 (phr) | 0.1 | 0.05 | 0.025 | --- | --- | --- |
| New Stabilizer (phr) | --- | --- | --- | 0.1 | 0.05 | 0.025 |
| RESULTS | | | | | | |
| 1/8" N.Izod (ft.lb/in) | 10.6 | 10.5 | 8.6 | 10.7 | 10.8 | 11.1 |
| Yellowness Index | 6.8 | 6.7 | 7.1 | 3.9 | 4.1 | 5.0 |
| Transmission % | 89.6 | 89.7 | 89.5 | 89.9 | 90.3 | 89.9 |
| Haze (%) | 1.2 | 0.8 | 0.9 | 0.7 | 0.5 | 0.7 |
| KI 6 min. csec | 25300 | 26210 | 26950 | 25030 | 26060 | 26560 |

As is observed from the data, significant decreases in yellowing is observed with the phosphite of the invention in comparison with the standard phosphite. Additionally, the haze has been substantially lowered in all the specimens. The other tested properties do not shown any significant decrease in value.

## Claims

1. A composition comprising an admixture of aromatic copolyestercarbonate with an anti-yellowing effective amount of a phosphite of the formula:

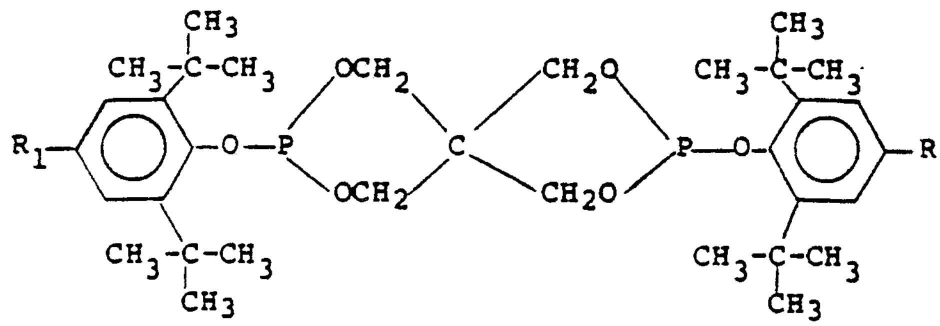

wherein R and $R_1$ are the same or different and are alkyl of one to six carbon atoms, inclusive.

2. The composition in accordance with claim 1 wherein R and $R_1$ are methyl.

3. The composition in accordance with claim 1 wherein the phosphite is present in from about 0.01 to 0.5 parts per hundred of the copolyestercarbonate.

4. The composition in accordance with claim 3 wherein the phosphite is present in from about 0.02 to 0.4 parts per hundred.

5. The composition in accordance with claim 1 wherein an end blocked polyorganohydrogen siloxane is essentially absent.

6. The composition in accordance with claim 5 wherein an epoxide is also essentially absent.

European Patent Office

# EUROPEAN SEARCH REPORT

Application Number

EP 88 11 9323

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 038 876 (ADEKA ARGUS)<br>* Page 38, lines 13-25; pages 55-56, examples 41-42 *<br>----- | 1-6 | C 08 K 5/52<br>C 08 L 69/00 |
| | | | TECHNICAL FIELDS SEARCHED (Int. Cl.4) |
| | | | C 08 K<br>C 08 L |

The present search report has been drawn up for all claims

| Place of search | Date of completion of the search | Examiner |
|---|---|---|
| THE HAGUE | 29-03-1989 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)